# EUROPÄISCHE PATENTSCHRIFT

(11) **EP 1 904 534 B1**
(45) Veröffentlichungstag und Bekanntmachung des Hinweises auf die Patenterteilung: **29.09.2010**
(21) Anmeldenummer: 06764115.9
(22) Anmeldetag: 10.07.2006
(51) Int. Cl.: C08F 2/22, C08F 2/18

(54) **WÄSSRIGE MONOMEREMULSIONEN ENTHALTEND HYDROPHOBIN**
AQUEOUS MONOMER EMULSIONS CONTAINING HYDROPHOBIN
EMULSIONS MONOMERES AQUEUSES CONTENANT DE L'HYDROPHOBINE

(30) Priorität: 14.07.2005 DE 102005033002
(43) Veröffentlichungstag der Anmeldung: 02.04.2008
(73) Patentinhaber: BASF SE, 67056 Ludwigshafen (DE)
(72) Erfinder: KÜHNLE, Angelika, 49076 Osnabrück (DE); EXNER, Christian, 67433 Neustadt (DE); BOLLSCHWEILER, Claus, 69118 Heidelberg (DE); SUBKOWSKI, Thomas, 68526 Ladenburg (DE); BAUS, Ulf, 69221 Dossenheim (DE); LEMAIRE, Hans-Georg, 67117 Limburgerhof (DE); KAROS, Marvin, 68723 Schwetzingen (DE)
(86) Internationale Anmeldenummer: PCT/EP2006/064040
(87) Internationale Veröffentlichungsnummer: WO 2007/006765

(56) Entgegenhaltungen:
- WO-A-96/41882
- WO-A-03/031500
- DE-A1- 2 609 104
- DE-A1- 2 638 839
- DE-A1- 4 220 225

## Beschreibung

Die Erfindung betrifft Emulsionen, von hydrophoben Monomeren in Wasser enthaltend anorganische Partikel als Pickering-Emulgatoren, und Hydrophobin, sowie ein Verfahren zur Herstellung dieser Emulsionen, wobei man die Monomere in Wasser in Gegenwart von als Pickering-Emulgator wirksamen anorganischen Partikeln dispergiert, **dadurch gekennzeichnet, dass** man Hydrophobin mitverwendet.

Außerdem betrifft die Erfindung die Verwendung von Hydrophobin bei der Herstellung von Emulsionen von hydrophoben Monomeren in Wasser, und ein Verfahren zur Suspensionspolymerisation von hydrophoben Monomeren in Wasser unter Mitverwendung von anorganischen Partikeln als Pickering-Emulgatoren, **dadurch gekennzeichnet, dass** man Hydrophobin mitverwendet.

Weiterhin betrifft die Erfindung die Verwendung der Emulsionen als Einsatzstoff in einer Suspensionspolymerisation.

Schließlich betrifft die Erfindung ein Verfahren zur Herstellung expandierbarer oder expandierter thermoplastischer Polymerpartikel unter Mitverwendung eines Treibmittels, **dadurch gekennzeichnet, dass** die Polymerpartikel mit dem genannten Verfahren zur Suspensionspolymerisation hergestellt werden und die nach diesem Verfahren erhältlichen expandierbaren oder expandierten Polymerpartikel, sowie die Verwendung dieser expandierbaren oder expandierten Polymerpartikel zur Herstellung von Schäumen oder Schaumstoff-Formkörpem.

Emulsionen von hydrophoben Monomeren in Wasser werden u.a. bei Polymerisationen als Ausgangsstoff eingesetzt. Beispielsweise kann man eine Emulsion von Styrol in Wasser durch Suspensionspolymerisation zu Polystyrolpartikeln polymerisieren. Sofern dabei Treibmittel mitverwendet werden, erhält man treibmittelhaltige, je nach Druck- und Temperaturbedingungen expandierbare oder expandierte Polymerpartikel, aus denen u.a. Schäume bzw. Schaumstoffkörper hergestellt werden können.

Die genannten Emulsionen von Monomeren in Wasser werden in vielen Fällen - wie andere Öl-in-Wasser-Emulsionen auch - durch Emulgatoren stabilisiert, die ein Zusammenfließen der in der Wasserphase verteilten Monomertröpfchen verhindern. Als Emulgatoren werden üblicherweise organischen Verbindungen, insbesondere Tenside (z.B. Seifen, Alkylsulfonate, Fettalkohol-Verbindungen) verwendet. Sie neigen allerdings zur Schaumbildung, und der Schaum kann die Handhabung der Emulsion deutlich erschweren und beispielsweise eine Förderung mit Pumpen unmöglich machen.

Insbesondere aus der Suspensionspolymerisation von wässrigen Monomeremulsionen, aber auch aus anderen Anwendungsgebieten sind sog. Pickering-Emulgatoren bekannt. Darunter versteht man wasserunlösliche anorganische Verbindungen, beispielsweise Magnesiumpyrophosphat oder Calciumphosphat. Sie werden in fein verteilter Form in der Emulsion verwendet und verhindern bei der Polymerisation ein Verkleben der polymerisierenden Monomertröpfchen. Sie neigen weit weniger zur Schaumbildung und können nach Polymerisationsende durch Auswaschen abgetrennt werden. Jedoch ist die Wirksamkeit der Pickering-Emulgatoren nicht immer zufriedenstellend, d.h. es gelingt nicht immer, mit ihnen eine stabile Emulsion herzustellen. Beispielsweise ist die Benetzbarkeit der Pickering-Emulgatorpartikel nicht immer dergestalt, dass sie grenzflächenaktiv sind.

DE 42 20 225 A1 offenbart die Herstellung perlförmiger expandierbarer Styrolpolymerisate durch Polymerisation von Styrol in wässriger Suspension unter Treibmittelzusatz, wobei als Suspensionsstabilisator eine Mischung aus Magnesiumpyrophosphat, Alkylsulfonaten als Extender, und einem (Erd)alkalicarboxylat, verwendet wird.

Hydrophobine sind kleine Proteine von etwa 100 bis 150 Aminosäuren, die charakteristisch für filamentöse Pilze, beispielsweise Schizophyllum commune, sind. Sie weisen in aller Regel 8 Cystein-Einheiten auf. Hydrophobine können aus natürlichen Quellen isoliert werden. Es können aber auch natürlich nicht vorkommende Hydrophobine mittels chemischer und/oder biotechnologischer Herstellverfahren synthetisiert werden.

Hydrophobine weisen eine ausgeprägte Affinität zu Grenzflächen auf und eignen sich daher zur Beschichtung von Oberflächen. So lässt sich beispielsweise Teflon® mittels Hydrophobinen unter Erhalt einer hydrophilen Oberfläche beschichten.

Hydrophobine können aus natürlichen Quellen isoliert werden. Die ältere, nicht vorveröffentlichte deutsche Patentanmeldung Az. DE 102005007480.4 vom 17.02.05 offenbart ein Herstellverfahren für Hydrophobine.

Im Stand der Technik ist die Verwendung von Hydrophobinen für verschiedene Anwendungen vorgeschlagen worden.

WO 01/57528 offenbart die Beschichtung von Fenstern, Kontaktlinsen, Biosensoren, medizinischen Vorrichtungen, Behältern zur Durchführung von Versuchen oder zur Lagerung, Schiffsrümpfen, festen Teilchen oder Rahmen oder Karosserie von Personenkraftwagen mit einer Hydrophobine enthaltenden Lösung bei einer Temperatur von 30 bis 80°C.

WO 01/57066 beschreibt ein spezielles Verfahren zum Beschichten mit Hydrophobin.

WO 03/53383 offenbart die Verwendung von Hydrophobin zum Behandeln von Keratin-Materialien in kosmetischen Anwendungen.

WO 03/10331 offenbart einen mit Hydrophobin beschichteten Sensor, beispielsweise eine Messelektrode, an den nicht kovalent weitere Substanzen, z.B. elektroaktive Substanzen, Antikörper oder Enzyme gebunden sind.

WO 96/41882 schlägt auf Seite 9-10 die Verwendung von Hydrophobinen als Emulgatoren, Verdicker, oberflächenaktive, Substanzen, zum Hydrophilieren hydrophober Oberflächen, zur Verbesserung der Wasserbeständigkeit hydrophiler Substrate, zur Herstellung von Öl-in-Wasser-Emulsionen oder von Wasser-in-Öl-Emulsionen vor. Weiterhin werden die Verwendung in Nahrungsmitteln zur Verbesserung ihrer Lagerfähigkeit, pharmazeutische Anwendungen wie die Herstellung von Salben oder Cremes sowie kosmetische Anwendungen wie Hautschutz oder die Herstellung von Haarshampoos oder Haarspülungen vorgeschlagen.

Es bestand die Aufgabe, Monomer-in-Wasser-Emulsionen mit einer alternativen Zusammensetzung bereit zu stellen. Die Emulsion sollte nicht zur Schaumbildung neigen und mehrere Stunden lang stabil sein, also keine Entmischung zeigen. Idealerweise sollte sie sich durch Suspensionspolymerisation polymerisieren lassen.

Demgemäß wurden die eingangs genannten Emulsionen, Verfahren, Verwendungen und Polymerpartikel gefunden. Bevorzugte Ausführungsformen der Erfindung sind den Unteransprüchen zu entnehmen. Alle Druckangaben sind Absolutdrucke.

### Hydrophobin

Die erfindungsgemäßen Emulsionen enthalten Hydrophobin. Unter dem Begriff "Hydrophobin" im Sinne der vorliegenden Erfindung sollen bevorzugt Proteine der allgemeinen Strukturformel (I)

Xₙ-C¹-X₁₋₅₀-C²-X₀₋₅-C³-X₁₋₁₀₀-C⁴-X₁₋₁₀₀-C⁵-X₁₋₅₀-C⁶-X₀₋₅-C⁷-X₁₋₅₀-C⁸-Xₘ (I)

verstanden werden, wobei X für jede der 20 natürlich vorkommenden Aminosäuren (Phe, Leu, Ser, Tyr, Cys, Trp, Pro, His, Gln, Arg, Ile, Met, Thr, Asn, Lys, Val, Ala, Asp, Glu, Gly) stehen kann. Dabei können X jeweils gleich oder verschieden sein. Hierbei stellen die bei X stehenden Indizes jeweils die Anzahl der Aminosäuren dar. C steht für Cystein, Alanin, Serin, Glycin, Methionin oder Threonin, wobei mindestens vier der mit C benannten Reste für Cystein stehen, und die Indizes n und m stehen unabhängig voneinander für natürliche Zahlen von 0 bis 500, bevorzugt von 15 bis 300.

Die Polypeptide gemäß Formel (I) sind weiterhin durch die Eigenschaft charakterisiert, dass sie bei Raumtemperatur nach Beschichten einer Glasoberfläche eine Vergrößerung des Kontaktwinkels eines Wassertropfens von mindestens 20°, bevorzugt mindestens 25° und besonders bevorzugt 30° bewirken, jeweils verglichen mit dem Kontaktwinkel eines gleich großen Wassertropfens mit der unbeschichteten Glasoberfläche.

Die mit C¹ bis C⁸ benannten Aminosäuren sind bevorzugt Cysteine; sie können aber auch durch andere Aminosäuren ähnlicher Raumerfüllung, bevorzugt durch Alanin, Serin, Threonin, Methionin oder Glycin ersetzt werden. Allerdings sollen mindestens vier, bevorzugt mindestens 5, besonders bevorzugt mindestens 6 und insbesondere mindestens 7 der Positionen C¹ bis C⁸ aus Cysteinen bestehen. Cysteine können in den erfindungsgemäßen Proteinen entweder reduziert vorliegen oder miteinander Disulfidbrücken ausbilden. Besonders bevorzugt ist die intramolekulare Ausbildung von C-C Brücken, insbesondere die mit mindestens einer, bevorzugt 2, besonders bevorzugt 3 und ganz besonders bevorzugt 4 intramolekularen Disulfidbrücken. Bei dem oben beschriebenen Austausch von Cysteinen durch Aminosäuren ähnlicher Raumerfüllung werden vorteilhaft solche C-Positionen paarweise ausgetauscht, die intramolekulare Disulfidbrücken untereinander ausbilden können.

Falls in den mit X bezeichneten Positionen auch Cysteine, Serine, Alanine, Glycine, Methionine oder Threonine verwendet werden, kann sich die Nummerierung der einzelnen C-Positionen in den allgemeinen Formeln entsprechend verändern.

Vorzugsweise werden Hydrophobine der allgemeinen Formel (II)

Xₙ-C¹-X₃₋₂₅-C²-X₀₋₂-C³-X₅₋₅₀-C⁴-X₂₋₃₅-C⁵-X₂₋₁₅-C⁶-₀₋₂-C⁷-X₃₋₃₅-C⁸-Xₘ (II)

zur Ausführung der vorliegenden Erfindung eingesetzt, wobei X, C und die bei X und C stehenden Indizes die obige Bedeutung haben, jedoch stehen die Indizes n und m unabhängig voneinander für natürliche Zahlen von 0 bis 300. Bevorzugt zeichnen sich die Proteine weiterhin durch die oben erwähnte Kontaktwinkeländerung aus.

Besonders bevorzugt werden Hydrophobine der allgemeinen Formel (III)

Xₙ-C¹-X₅₋₉-C²-C³-X₁₁₋₃₉-C⁴-X₂₋₂₃-C⁵-X₅₋₉-C⁶-C⁷-X₆₋₁₈-C₈-Xₘ (III)

eingesetzt, wobei X, C und die bei X und C stehenden Indizes die obige Bedeutung haben, die Indizes n und m für Zahlen von 0 bis 200 stehen. Bevorzugt zeichnen sich die Proteine weiterhin durch die oben erwähnte Kontaktwinkeländerung aus. Ebenfalls bevorzugt handelt es sich bei mindestens 6 der mit C benannten Reste um Cystein. Besonders bevorzugt handelt es sich bei allen Resten C um Cystein.

Bei den Resten Xₙ und Xₘ kann es sich um Peptidsequenzen handeln, die natürlicherweise mit einem Hydrophobin verknüpft sind. Es kann sich aber auch bei einem oder beiden Resten um Peptidsequenzen handeln, die natürlicherweise nicht mit einem Hydrophobin verknüpft sind. Darunter sind auch solche Reste Xₙ und/oder Xₘ zu verstehen, bei denen eine natürlicherweise in einem Hydrophobin vorkommende Peptidsequenz durch eine nicht natürlicherweise in einem Hydrophobin vorkommende Peptidsequenz verlängert ist.

Falls es sich bei Xₙ und/oder Xₘ um natürlicherweise nicht mit Hydrophobinen verknüpfte Peptidsequenzen handelt, sind derartige Sequenzen in der Regel mindestens 20, bevorzugt mindestens 35, besonders bevorzugt mindestens 50 und ganz besonders bevorzugt mindestens 100 Aminosäuren lang. Ein derartiger, natürlicherweise nicht mit einem Hydrophobin verknüpfter Rest soll im Folgenden auch als Fusionspartner bezeichnet werden. Damit soll ausgedrückt werden, dass die Proteine aus mindestens einem Hydrophobinteil und einem Fusionspartner bestehen können, die in der Natur nicht zusammen in dieser Form vorkommen.

Der Fusionspartner kann aus einer Vielzahl von Proteinen ausgewählt werden. Es können auch mehrere Fusionspartner mit einem Hydrophobinteil verknüpft werden beispielsweise am Aminoterminus (Xₙ) und am Carboxyterminus (Xₘ) des Hydrophobinteils. Es können aber auch beispielsweise zwei Fusionspartnerteile mit einer Position (Xₙ oder Xₘ) des erfindungsgemäßen Proteins verknüpft werden.

Besonders geeignete Fusionspartnerteile sind Proteine, die natürlicherweise in Mikroorganismen, insbesondere in E. coli oder Bacillus subtilis vorkommen. Beispiele für solche Fusionspartnerteile sind die Sequenzen yaad (SEQ ID NO: 15 und 16) , yaae (SEQ ID NO: 17 und 18), und Thioredoxin. Gut geeignet sind auch Fragmente oder Derivate dieser genannten Sequenzen, die nur einen Teil, bevorzugt 70-99%, besonders bevorzugt 80-98% der genannten Sequenzen umfassen, oder bei denen einzelne Aminosäuren, bzw. Nukleotide gegenüber der genannten Sequenz verändert sind, wobei sich die Prozentangaben jeweils auf die Anzahl der Aminosäuren bezieht.

Die erfindungsgemäß verwendeten Proteine können auch noch in ihrer Polypeptidsequenz modifiziert sein, beispielsweise durch Glycosilierung, Acetylierung oder auch durch chemische Quervernetzung beispielsweise mit Glutardialdehyd.

Eine Eigenschaft der erfindungsgemäß verwendeten Proteine ist die Änderung von Oberflächeneigenschaften, wenn die Oberflächen mit den Proteinen beschichtet werden. Die Änderung der Oberflächeneigenschaften lässt sich experimentell dadurch bestimmen, dass der Kontaktwinkel eines Wassertropfens vor und nach der Beschichtung der Oberfläche mit dem Protein gemessen wird und die Differenz der beiden Messungen ermittelt wird.

Die Durchführung von Kontaktwinkelmessungen ist dem Fachmann prinzipiell bekannt. Die Messungen beziehen sich auf Raumtemperatur sowie Wassertropfen von 5 µl. Die genauen experimentellen Bedingungen für eine beispielhaft geeignete Methode zur Messung des Kontaktwinkels sind im experimentellen Teil dargestellt. Unter den dort genannten Bedingungen besitzen die erfindungsgemäß verwendeten Proteine die Eigenschaft, den Kontaktwinkel um mindestens 20", bevorzugt mindestens 25°, besonders bevorzugt mindestens 30° zu vergrößern, jeweils verglichen mit dem Kontaktwinkel eines gleich großen Wassertropfens mit der unbeschichteten Glasoberfläche.

Im Hydrophobinteil der bisher bekannten Hydrophobine sind die Positionen der polaren und unpolaren Aminosäuren konserviert, was sich in einem charakteristischen Hydrophobizitätsplot äußert. Unterschiede in den biophysikalischen Eigenschaften und in der Hydrophobizität führten zur Einteilung der bisher bekannten Hydrophobine in zwei Klassen, I und II (Wessels et al. 1994, Ann. Rev. Phytopathol., 32, 413-437).

Die assemblierten Membranen aus Klasse I Hydrophobinen sind hochgradig unlöslich (selbst gegenüber 1% Na-Dodecylsulfat (SDS) bei erhöhter Temperatur) und können nur durch konzentrierte Trifluoressigsäure (TFA), bzw. Ameisensäure wieder dissoziiert werden. Im Gegensatz dazu sind die assemblierten Formen von Klasse II Hydrophobinen weniger stabil. Sie können bereits durch 60%iges Ethanol, bzw. 1% SDS (bei Raumtemperatur) wieder aufgelöst werden.

Ein Vergleich der Aminosäuresequenzen zeigt, dass die Länge des Bereichs zwischen Cystein C³ und C⁴ bei Klasse II-Hydrophobinen deutlich kürzer ist, als bei Hydrophobinen der Klasse I. Klasse II-Hydrophobine weisen weiterhin mehr geladene Aminosäuren als Klasse I auf.

Besonders bevorzugte Hydrophobine zur Ausführung der vorliegenden Erfindung sind die Hydrophobine des Typs dewA, rodA, hypA, hypB, sc3, basf1 und basf2, die im nachfolgenden Sequenzprotokoll strukturell charakterisiert sind. Es kann sich auch nur um Teile oder Derivate davon handeln. Es können auch mehrere Hydrophobinteile, bevorzugt 2 oder 3, gleicher oder unterschiedlicher Struktur miteinander verknüpft und mit einer entsprechenden geeigneten Polypeptidsequenz, die natürlicherweise nicht mit einem Hydrophobin verbunden ist, verknüpft werden.

Besonders geeignet zur Durchführung der vorliegenden Erfindung sind weiterhin die Fusionsproteine mit den in SEQ ID NO: 20, 22, 24 dargestellten Polypeptidsequenzen sowie den dafür codierenden Nukleinsäuresequenzen, insbesondere den Sequenzen gemäss SEQ ID NO: 19, 21, 23. Auch Proteine, die sich ausgehend von den in SEQ ID NO: 22, 22 oder 24 dargestellten Polypeptidsequenzen durch Austausch, Insertion oder Deletion von mindestens einer, bis hin zu 10, bevorzugt 5, besonders bevorzugt 5% aller Aminosäuren ergeben, und die die biologische Eigenschaft der Ausgangsproteine noch zu mindestens 50% besitzen, sind besonders bevorzugte Ausführungsformen. Unter biologischer Eigenschaft der Proteine wird hierbei die bereits beschriebene Vergrößerung des Kontaktwinkels um mindestens 20° verstanden.

Das Hydrophobin wird bevorzugt in einer Menge von 20 bis 150, insbesondere 30 bis 100 und besonders bevorzugt 40 bis 90 ppmw (parts per million by weight), bezogen auf die Gesamtmenge der Emulsion, eingesetzt. Für Styrol als Monomer beträgt die Hydrophobinmenge beispielsweise 20 bis 100, insbesondere 40 bis 90 ppmw, bezogen auf die Emulsion.

Man kann das Hydrophobin der Emulsion als solches zufügen, oder gelöst bzw. dispergiert in einem Lösungs- bzw. Dispersionsmittel. Ein geeignetes Lösungs- bzw. Dispersionsmittel ist Wasser. Der Hydrophobingehalt einer solchen Lösung bzw. Dispersion beträgt in der Regel 0,3 bis 1,2, bevorzugt 0,35 bis 0,5 Gew.-%. Bevorzugt fügt man das Hydrophobin als wässrige Lösung zu.

### Herstellung des Hydrophobins

Die erfindungsgemäß verwendeten Hydrophobine lassen sich chemisch durch bekannte Verfahren der Peptidsynthese, beispielsweise durch Festphasensynthese nach Merrifield herstellen.

Natürlich vorkommende Hydrophobine lassen sich aus natürlichen Quellen mittels geeigneter Methoden isolieren. Beispielhaft sei auf Wösten et. al., Eur. J Cell Bio. 63, 122-129 (1994) oder WO 96/41882 verwiesen.

Die Herstellung von Fusionsproteinen kann bevorzugt durch gentechnische Verfahren erfolgen, bei denen eine für den Fusionspartner und eine für den Hydrophobinteil codierende Nukleinsäuresequenz, insbesondere DNA-Sequenz, so kombiniert werden, dass in einem Wirtsorganismus durch Genexpression der kombinierten Nukleinsäuresequenz das gewünschte Protein erzeugt wird. Ein derartiges Herstellverfahren ist in unserer eingangs erwähnten älteren Anmeldung Az. DE 102005007480.4 offenbart.

Geeignete Wirtsorganismen (Produktionsorganismen) für das genannte Herstellverfahren können dabei Prokaryonten (einschließlich der Archaea) oder Eukaryonten sein, besonders Bakterien einschließlich Halobacterien und Methanococcen, Pilze, Insektenzellen, Pflanzenzellen und Säugerzellen, besonders bevorzugt Escherichia coli, Bacillus subtilis, Bacillus megaterium, Aspergillus oryzea, Aspergillus nidulans, Aspergillus niger, Pichia pastoris, Pseudomonas spec., Lactobacillen, Hansenula polymorpha, Trichoderma reesei, SF9 (bzw. verwandte Zellen) u.a.

Möglich ist außerdem die Verwendung von Expressionskonstrukten, enthaltend unter der genetischen Kontrolle regulativer Nukleinsäuresequenzen, eine für ein erfindungsgemäß verwendetes Polypeptid kodierende Nukleinsäuresequenz, sowie Vektoren, umfassend wenigstens eines dieser Expressionskonstrukte.

Vorzugsweise umfassen eingesetzte Konstrukte 5'-stromaufwärts von der jeweiligen kodierenden Sequenz einen Promotor und 3'-stromabwärts eine Terminatorsequenz sowie gegebenenfalls weitere übliche regulative Elemente, und zwar jeweils operativ verknüpft mit der kodierenden Sequenz.

Unter einer "operativen Verknüpfung" versteht man die sequentielle Anordnung von Promotor, kodierenden Sequenz, Terminator und gegebenenfalls weiterer regulativer Elemente derart, dass jedes der regulativen Elemente seine Funktion bei der Expression der kodierenden Sequenz bestimmungsgemäß erfüllen kann.

Beispiele für operativ verknüpfbare Sequenzen sind Targeting-Sequenzen sowie Enhancer, Polyadenylierungssignale und dergleichen. Weitere regulative Elemente umfassen selektierbare Marker, Amplifikationssignale, Replikationsursprünge und dergleichen. Geeignete regulatorische Sequenzen sind z. B. beschrieben in Goeddel, Gene Expression Technology : Methods in Enzymology 185, Academic Press, San Diego, CA (1990).

Zusätzlich zu diesen Regulationssequenzen kann die natürliche Regulation dieser Sequenzen vor den eigentlichen Strukturgenen noch vorhanden sein und gegebenenfalls genetisch verändert, worden sein, so dass die natürliche Regulation ausgeschaltet und die Expression der Gene erhöht wurde.

Ein bevorzugtes Nukleinsäurekonstrukt enthält vorteilhaft auch eine oder mehrere der schon erwähnten "Enhancer"-Sequenzen, funktionell verknüpft mit dem Promotor, die eine erhöhte Expression der Nukleinsäuresequenz ermöglichen. Auch am 3'-Ende der DNA-Sequenzen können zusätzliche vorteilhafte Sequenzen inseriert werden, wie weitere regulatorische Elemente oder Terminatoren.

Die Nukleinsäuren können in einer oder mehreren Kopien im Konstrukt enthalten sein. Im Konstrukt können noch weitere Marker, wie Antibiotikaresistenzen oder Auxotrophien komplementierende Gene, gegebenenfalls zur Selektion auf das Konstrukt enthalten sein.

Vorteilhafte Regulationssequenzen für das Verfahren sind beispielsweise in Promotoren wie cos-, tac-, trp-, tet-, trp-, tet-, Ipp-, lac-, Ipp-, Iac-, Iaclq-T7-, T5-, T3-, gal-, trc-, ara-, rhaP(rhaPBAD) SP6-, lambda-PR-oder imlambda-P-Promotor enthalten, die vorteilhaft in gram-negativen Bakterien Anwendung finden. Weitere vorteilhafte Regulationssequenzen sind beispielsweise in den gram-positiven Promotoren amy und SP02, in den Hefe-oder Pilzpromotoren ADC1, MFalpha, AC, P-60, CYC1, GAPDH, TEF, rp28, ADH enthalten.

Es können auch künstliche Promotoren für die Regulation verwendet werden.

Das Nukleinsäurekonstrukt wird zur Expression in einem Wirtsorganismus vorteilhafterweise in einen Vektor, wie beispielsweise einem Plasmid oder einem Phagen inseriert, der eine optimale Expression der Gene im Wirt ermöglicht. Unter Vektoren sind außer Plasmiden und Phagen auch alle anderen dem Fachmann bekannten Vektoren, also z. B. Viren, wie SV40, CMV, Baculovirus und Adenovirus, Transposons, IS- Elemente, Phasmide, Cosmide, und lineare oder zirkuläre DNA, sowie das Agrobacterium-System zu verstehen.

Diese Vektoren können autonom im Wirtsorganismus repliziert oder chromosomal repliziert werden. Diese Vektoren stellen eine weitere Ausgestaltung der Erfindung dar. Geeignete Plasmide sind beispielsweise in E. coli pLG338, pACYC184, pBR322, pUC18, pUC19, pKC30, pRep4, pHS1, pKK223-3, pDHE19.2, pHS2, pPLc236, pMBL24, pLG200, pUR290,pIN-III"3-B1, tgt11 Oder pBdCl, in Streptomyces pIJ101, pIJ364, pIJ702 oder pIJ361, in Bacillus pUB110, pC194 oder pBD214, in Corynebacterium pSA77 oder pAJ667, in Pilzen pALS1, pIL2 oder pBB116, in Hefen 2alpha, pAG-1, YEp6, YEp13 oder pEMBLYe23 oder in Pflanzen pLGV23,pGHlac+, pBIN19, pAK2004 oder pDH51. Die genannten Plasmide stellen eine kleine Auswahl der möglichen Plasmide dar. Weitere Plasmide sind dem Fachmann bekannt und können beispielsweise aus dem Buch Cloning Vectors (Eds. Pouwels P. H. et al. Elsevier, Amsterdam-New York-Oxford, 1985, ISBN 0 444 904018) entnommen werden.

Vorteilhaft enthält das Nukleinsäurekonstrukt zur Expression der weiteren enthaltenen Gene zusätzlich noch 3'-und/oder 5'-terminale regulatorische Sequenzen zur Steigerung der Expression, die je nach ausgewähltem Wirtorganismus und Gen oder Gene für eine optimale Expression ausgewählt werden.

Diese regulatorischen Sequenzen sollen die gezielte Expression der Gene und der Proteinexpression ermöglichen. Dies kann beispielsweise je nach Wirtsorganismus bedeuten, dass das Gen erst nach Induktion exprimiert oder überexprimiert wird, oder dass es sofort exprimiert und/oder überexprimiert wird.

Die regulatorischen Sequenzen bzw. Faktoren können dabei vorzugsweise die Genexpression der eingeführten Gene positiv beeinflussen und dadurch erhöhen. So kann eine Verstärkung der regulatorischen Elemente vorteilhafterweise auf der Transkriptionsebene erfolgen, indem starke Transkriptionssignale wie Promotoren und/oder "Enhancer" verwendet werden. Daneben ist aber auch eine Verstärkung der Translation möglich, indem beispielsweise die Stabilität der mRNA verbessert wird.

In einer weiteren Ausgestaltungsform des Vektors kann der das Nukleinsäurekonstrukt oder die Nukleinsäure enthaltende Vektor auch vorteilhaft in Form einer linearen DNA in die Mikroorganismen eingeführt werden und über heterologe oder homologe Rekombination in das Genom des Wirtsorganismus integriert werden. Diese lineare DNA kann aus einem linearisierten Vektor wie einem Plasmid oder nur aus dem Nukleinsäurekonstrukt oder der Nukleinsäure bestehen.

Für eine optimale Expression heterologer Gene in Organismen ist es vorteilhaft die Nukleinsäuresequenzen entsprechend des im Organismus verwendeten spezifischen "codon usage" zu verändern. Der "codon usage" lässt sich anhand von Computerauswertungen anderer, bekannter Gene des betreffenden Organismus leicht ermitteln.

Die Herstellung einer Expressionskassette erfolgt durch Fusion eines geeigneten Promotors mit einer geeigneten kodierenden Nukleotidsequenz sowie einem Terminator- oder Polyadenylierungssignal. Dazu verwendet man gängige Rekombinations- und Klonierungstechniken, wie sie beispielsweise in T. Maniatis, E. F.Fritsch und J. Sambrook, Molecular Cloning: A Laboratory Manual, Cold Spring Harbor Laboratory, Cold Spring Harbor, NY (1989) sowie in T. J. Silhavy, M. L. Berman und L. W. Enquist, Experiments with Gene Fusions, Cold Spring Harbor Laboratory, Cold Spring Harbor, NY (1984) und in Ausubel, F. M. et al., Current Protocols in Molecular Biology, Greene Publishing Assoc. and Wiley Interscience (1987) beschrieben sind.

Das rekombinante Nukleinsäurekonstrukt bzw. Genkonstrukt wird zur Expression in einem geeigneten Wirtsorganismus, vorteilhaft in einen wirtsspezifischen Vektor insertiert, der eine optimale Expression der Gene im Wirt ermöglicht. Vektoren sind dem Fachmann wohl bekannt und können beispielsweise aus "Cloning Vectors" (Pouwels P. H. et al., Hrsg, Elsevier, Amsterdam-New York-Oxford, 1985) entnommen werden.

Mit Hilfe der Vektoren sind rekombinante Mikroorganismen herstellbar, welche beispielsweise mit wenigstens einem Vektor transformiert sind und zur Produktion der erfindungsgemäß verwendeten Proteine eingesetzt werden können. Vorteilhafterweise werden die oben beschriebenen rekombinanten Konstrukte in ein geeignetes Wirtssystem eingebracht und exprimiert. Dabei werden vorzugsweise dem Fachmann bekannte geläufige Klonierungs- und Transfektionsmethoden, wie beispielsweise Co-Präzipitation, Protoplastenfusion, Elektroporation, retrovirale Transfektion und dergleichen, verwendet, um die genannten Nukleinsäuren im jeweiligen Expressionssystem zur Expression zu bringen. Geeignete Systeme werden beispielsweise in Current Protocols in Molecular Biology, F. Ausubel et al., Hrsg., Wiley Interscience, New York 1997, oder Sambrook et al. Molecular Cloning : A Laboratory Manual. 2. Aufl., Cold Spring Harbor Laboratory, Cold Spring Harbor, Laboratory Press, Cold Spring Harbor, NY, 1989, beschrieben.

Es sind auch homolog rekombinierte Mikroorganismen herstellbar. Dazu wird ein Vektor hergestellt, der zumindest einen Abschnitt eines erfindungsgemäß zu verwendenden Gens oder einer kodierenden Sequenz enthält, worin gegebenenfalls wenigstens eine Aminosäure-Deletion, -Addition oder -Substitution eingebracht worden ist, um die Sequenz zu verändern, z. B. funktionell zu disruptieren ("Knockout"-Vektor). Die eingebrachte Sequenz kann z. B. auch ein Homologes aus einem verwandten Mikroorganismus sein oder aus einer Säugetier-, Hefe- oder Insektenquelle abgeleitet sein. Der zur homologen Rekombination verwendete Vektor kann alternativ derart ausgestaltet sein, dass das endogene Gen bei homologer Rekombination mutiert oder anderweitig verändert ist, jedoch noch das funktionelle Protein kodiert (z. B. kann der stromaufwärts gelegene regulatorische Bereich derart verändert sein, dass dadurch die Expression des endogenen Proteins verändert wird). Der veränderte Abschnitt des erfindungsgemäß verwendeten Gens ist im homologen Rekombinationsvektor. Die Konstruktion geeigneter Vektoren zur homologen Rekombination ist z. B. beschrieben in Thomas, K. R. und Capecchi, M. R. (1987) Cell 51 : 503.

Als rekombinante Wirtsorganismen für die erfindungsgemäß verwendete Nukleinsäure oder dem Nukleinsäurekonstrukt kommen prinzipiell alle prokaryontischen oder eukaryontischen Organismen in Frage. Vorteilhafterweise werden als Wirtsorganismen Mikroorganismen wie Bakterien, Pilze oder Hefen verwendet. Vorteilhaft werden grampositive oder gram-negative Bakterien, bevorzugt Bakterien der Familien Enterobacteriaceae, Pseudomonadaceae, Rhizobiaceae, Streptomycetaceae oder Nocardiaceae, besonders bevorzugt Bakterien der Gattungen Escherichia, Pseudomonas, Streptomyces, Nocardia, Burkholderia, Salmonella, Agrobacterium oder Rhodococcus verwendet.

Die im Herstellverfahren für Fusionsproteine verwendeten Organismen werden je nach Wirtsorganismus in dem Fachmann bekannter Weise angezogen bzw. gezüchtet. Mikroorganismen werden in der Regel in einem flüssigen Medium, das eine Kohlenstoffquelle meist in Form von Zuckern, eine Stickstoffquelle meist in Form von organischen Stickstoffquellen wie Hefeextrakt oder Salzen wie Ammoniumsulfat, Spurenelemente wie Eisen-, Mangan- und Magnesiumsalze sowie gegebenenfalls Vitamine enthält, bei Temperaturen zwischen 0 und100 °C, bevorzugt zwischen 10 bis 60 °C unter Sauerstoffbegasung angezogen. Dabei kann der pH-Wert der Nährflüssigkeit auf einem festen Wert gehalten werden, das heißt während der Anzucht reguliert werden oder nicht. Die Anzucht kann "batch"-weise, "semi-batch"-weise oder kontinuierlich erfolgen. Nährstoffe können zu Beginn der Fermentation vorgelegt oder semikontinuierlich oder kontinuierlich nachgefüttert werden. Die Enzyme können nach dem in den Beispielen beschriebenen Verfahren aus den Organismen isoliert werden oder als Rohextrakt für die Reaktion verwendet werden.

Erfindungsgemäß verwendete Proteine oder funktionelle, biologisch aktive Fragmente davon, können mittels eines rekombinanten Verfahrens hergestellt werden, bei dem man einen Proteine-produzierenden Mikroorganismus kultiviert, gegebenenfalls die Expression der Proteine induziert und diese aus der Kultur isoliert. Die Proteine können so auch in großtechnischem Maßstab produziert werden, falls dies erwünscht ist. Der rekombinante Mikroorganismus kann nach bekannten Verfahren kultiviert und fermentiert werden. Bakterien können beispielsweise in TB-oder LB-Medium und bei einer Temperatur von 20 bis 40°C und einem pH-Wert von 6 bis 9 vermehrt werden. Im Einzelnen werden geeignete Kultivierungsbedingungen beispielsweise in T. Maniatis, E. F. Fritsch and J. Sambrook, Molecular Cloning: A Laboratory Manual, Cold Spring Harbor Laboratory, Cold Spring Harbor, NY (1989) beschrieben.

Die Zellen werden dann, falls die erfindungsgemäß verwendeten Proteine nicht in das Kulturmedium sezerniert werden, aufgeschlossen und das Produkt nach bekannten Proteinisolierungsverfahren aus dem Lysat gewonnen. Die Zellen können wahlweise durch hochfrequenten Ultraschall, durch hohen Druck, wie z. B. in einer French-Druckzelle, durch Osmolyse, durch Einwirkung von Detergenzien, lytischen Enzymen oder organischen Lösungsmitteln, durch Homogenisatoren oder durch Kombination mehrerer der aufgeführten Verfahren aufgeschlossen werden.

Eine Aufreinigung der erfindungsgemäß verwendeten Proteine kann mit bekannten, chromatographischen Verfahren erzielt werden, wie Molekularsieb-Chromatographie (Gelfiltration), wie Q-Sepharose-Chromatographie, lonenaustausch-Chromatographie und hydrophobe Chromatographie, sowie mit anderen üblichen Verfahren wie Ultrafiltration,Kristallisation, Aussalzen, Dialyse und nativer Gelelektrophorese. Geeignete Verfahren werden beispielsweise in Cooper, F. G., Biochemische Arbeitsmethoden, Verlag Water de Gruyter, Berlin, New York oder in Scopes, R., Protein Purification, Springer Verlag, New York, Heidelberg, Berlin beschrieben.

Vorteilhaft kann es sein, zur Isolierung des rekombinanten Proteins Vektorsysteme oder Oligonukleotide zu verwenden, die die cDNA um bestimmte Nukleotidsequenzen verlängern und damit für veränderte Proteine oder Fusionsproteine kodieren, die beispielsweise einer einfacheren Reinigung dienen. Derartige geeignete Modifikationen umfassen als Anker fungierende sogenannte "Tags", wie beispielsweise die als Hexa-Histidin-Anker bekannte Modifikation oder Epitope, die als Antigene von Antikörpern erkannt werden können (beschrieben zum Beispiel in Harlow, E. and Lane, D., 1988, Antibodies: A Laboratory Manual. Cold Spring Harbor (N. Y. ) Press). Weitere geeignete Tags sind z.B. HA, Calmodulin-BD, GST, MBD; Chitin-BD, Steptavidin-BD-Avi-Tag, Flag-Tag, T7. Diese Anker können zur Anheftung der Proteine an einen festen Träger, wie z. B. einer Polymermatrix, dienen, die beispielsweise in einer Chromatographiesäule eingefüllt sein kann, oder an einer Mikrotiterplatte oder an einem sonstigen Träger verwendet werden kann. Die entsprechenden sonstigen Träger verwendet werden kann. Die entsprechenden Reinigungsprotokolle sind von den kommerziellen Affinitäts-Tag-Anbietern erhältlich.

Die wie beschrieben hergestellten Proteine können sowohl direkt als Fusionsproteine als auch nach Abspaltung und Abtrennung des Fusionspartners als "reine" Hydrophobine verwendet werden.

Wenn eine Abtrennung des Fusionspartners vorgesehen ist, empfiehlt es sich eine potentielle Spaltstelle (spezifische Erkennungsstelle für Proteasen) in das Fusionsprotein zwischen Hydrophobinteil und Fusionspartnerteil einzubauen. Als Spaltstelle geeignet sind insbesondere solche Peptidsequenzen geeignet, die ansonsten weder im Hydrophobinteil noch im Fusionspartnerteil vorkommen, was sich mit bioinformatischen Tools leicht ermitteln lässt. Besonders geeignet sind beispielsweise BrCN-Spaltung an Methionin, oder durch Protease vermittelte Spaltlung mit Faktor Xa-, Enterokinase-, Thrombin, TEV-Spaltung (Tobacca etch virus Protease).

### Monomere

Als Monomere für die erfindungsgemäße Emulsion eignen sich prinzipiell alle hydrophoben Monomere. Dabei bedeutet hydrophob, dass sich beim Zusammengeben der Monomere mit Wasser zwei Phasen ausbilden, d.h. die Monomere sind nicht oder nur in geringem Ausmaß wassermischbar.

Bevorzugt ist das Monomer Styrol, wobei man ggf. Comonomere in Mengenanteilen von bis zu 50 Gew.-%, bezogen auf die Gesamtmonomermenge, mitverwenden kann. Solche Comonomere sind z.B. α-Methylstyrol, kernhalogenierte Styrole, kernalkylierte Styrole, Acrylnitril, Ester der Acrylsäure oder Methacrylsäure von Alkoholen mit 1 bis 8 C-Atomen, N-Vinylverbindungen wie Vinylcarbazol oder auch geringe Mengen an Verbindungen mit zwei polymerisierbaren Doppelbindungen, z.B. Butadien, Divinylbenzol oder Butandioldiacrylat. Ganz besonders bevorzugt wird alleine Styrol verwendet.

Demnach sind die erfindungsgemäßen Emulsionen bevorzugt **dadurch gekennzeichnet, dass** das Monomer Styrol ist, wobei Comonomere mitverwendet werden können, die ausgewählt sind aus α-Methylstyrol, kernhalogenierten Styrolen, kernalkylierten Styrolen, Acrylnitril, Estern der Acrylsäure oder Methacrylsäure von C₁₋₈-Alkoholen, N-Vinylverbindungen, Butadien, Divinylbenzol oder Butandioldiacrylat.

Das Volumenverhältnis von Monomer zu Wasser in der erfindungsgemäßen Emulsion (Phasenvolumenverhältnis) hängt u.a. vom verwendeten Monomer ab und beträgt in der Regel 0,75 : 1 bis 1,5 : 1, insbesondere 0,9 : 1 bis 1,4 : 1 und besonders bevorzugt 1 : 1 bis 1,4 : 1. Für Styrol als Monomer beträgt das Volumenverhältnis von Styrol zu Wasser beispielsweise 1 : 1 bis 1,5 : 1, bevorzugt 1,1 : 1 bis 1,4 : 1 und insbesondere 1,2 : 1 bis 1,3:1.

### Anorganische Partikel

Erfindungsgemäß enthält die Emulsion anorganische Partikel als Pickering-Emulgatoren. Derartige Partikel sind bekannt, beispielsweise aus Aveyard et al., Adv. Coll. Interf. Sci. 100-102 (2003), 503-546.

Bevorzugt sind die anorganischen Partikel ausgewählt aus Partikeln enthaltend Magnesiumpyrophosphat (MPP), Bariumsulfat, Zinkoxid und Calciumphosphat. Davon sind Partikel enthaltend Magnesiumpyrophosphat bevorzugt, insbesondere für Styrol als Monomer.

Die Herstellung dieser Partikel (Pickering-Emulgatoren) erfolgt durch übliche Umsetzungen der anorganischen Chemie, also beispielsweise durch Ausfällen aus einer Lösung oder durch Festkörper-Reaktionen. Bevorzugt stellt man die Partikel unmittelbar vor ihrer Verwendung durch Vereinigen geeigneter wässriger Lösungen oder durch Zugabe einer wässrigen Lösung zu einem Feststoff her, wobei die Partikel als schwerlösliche Verbindung ausfallen.

Beispielsweise kann man MPP-Partikel durch Vereinigen einer wässrigen Lösung eines Alkalipyrophosphats mit mindestens der stöchiometrisch erforderlichen Menge eines Magnesiumsalzes herstellen, wobei das Magnesiumsalz in fester Form oder in wässriger Lösung vorliegen kann. Besonders bevorzugt wird das MPP durch Vereinigen wässriger Lösungen von Natriumpyrophosphat (Na₄P₂O₇) und Magnesiumsulfat (MgSO₄ • 7 H₂O) hergestellt. Vorzugsweise legt man gelöstes Natriumpyrophosphat vor und fügt die Magnesiumsulfatlösung hinzu. Das Magnesiumsalz wird in mindestens der stöchiometrisch erforderlichen Menge zugegeben, bevorzugt in exakt der stöchiometrischen Menge. Insbesondere sollte kein Überschuss an Alkalipyrophosphat vorliegen.

Besonders bevorzugt wird das MPP nicht in Gegenwart der gesamten Menge an wässriger Phase der Emulsion hergestellt. Es ist vorteilhaft, weniger als die Hälfte des zur Herstellung der Emulsion insgesamt verwendeten Wassers zu verwenden. Beispielsweise kann man zu einer etwa 3 gew.-%igen Natruimpyrophosphatlösung eine etwa 20 gew.-%ige Magnesiumsulfatlösung zugeben. Weitere Einzelheiten sind der DE 42 20 225 A1 zu entnehmen.

Die Partikelgröße der anorganischen Partikel (Pickering-Emulgatoren ) wird durch die Fällungsbedingungen gesteuert und beträgt üblicherweise 10 nm bis 10 µm, bevorzugt 10 nm bis 1 µm und besonders bevorzugt 20 bis 100 nm, ausgedrückt als zahlenmittlerer Teilchendurchmesser d₅₀ (je 50 % der Teilchen sind kleiner bzw. größer als der d₅₀-Durchmesser). Bevorzugt weisen die Partikel eine nichtsphärische Gestalt auf.

Die anorganischen Partikel werden in der Regel in einer Menge von 500 bis 1000, vorzugsweise 600 bis 900 und insbesondere 700 bis 800 ppmw, bezogen auf die Emulsion, eingesetzt. Für Styrol als Monomer beträgt die Menge beispielsweise in der Regel 600 bis 900, bevorzugt 700 bis 800 ppmw, bezogen auf die Emulsion.

Man kann die anorganischen Partikel der Emulsion als solche zufügen, oder bevorzugt suspendiert in einem Suspensionsmittel. Ein geeignetes Suspensionsmittel ist Wasser. Vorzugsweise setzt man unmittelbar die bei der Herstellung der Partikel erhaltene wässrige Suspension ein. Eine solche Suspension enthält beispielsweise 1 bis 2, bevorzugt 1,7 bis 1,9 Gew.-% der anorganischen Partikel. Die Verwendung einer frisch hergestellten Suspension ist besonders bevorzugt.

### Sonstige Bestandteile der Emulsion

Neben Wasser, Monomeren, anorganischen Partikeln (Pickering-Emulgatoren) und Hydrophobin kann die erfindungsgemäße Emulsion noch weitere Bestandteile enthalten.

Beispielsweise kann man ein Treibmittel zufügen, sofern die erfindungsgemäße Emulsion einer Polymerisation unterworfen werden soll und dabei treibmittelhaltige, expandierbaren oder expandierten Polymerpartikel hergestellt werden sollen. Geeignete Treibmittel sind insbesondere physikalische Treibmittel, wie Kohlendioxid, aliphatische Kohlenwasserstoffe mit 2 bis 7 Kohlenstoffatomen, Alkohole, Ketone, Ether, halogenierte Kohlenwasserstoffe oder Wasser, oder deren Mischungen. Soll z.B. eine Styrolin-Wasser-Emulsion zu treibmittelhaltigen Polystyrolpartikeln polymerisiert werden, wird bevorzugt Propan, iso-Butan, n-Butan, iso-Pentan, Neopentan, n-Pentan, Hexan, Kohlendioxid bzw. deren Mischungen, eingesetzt.

Falls ein Treibmittel zugefügt wird, beträgt seine Menge üblicherweise 1 bis 10, bevorzugt 3 bis 8 Gew.-%, bezogen auf die Monomermenge.

Zwingend erforderlich ist ein Treibmittelzusatz jedoch nicht, denn bekanntlich lassen sich treibmittelhaltige Polymerpartikel auch nach anderen Verfahren herstellen, beispielsweise durch Imprägnieren der fertigen Polymerpartikel mit dem Treibmittel unter erhöhtem Druck und erhöhter Temperatur, wobei das Treibmittel in die erweichten Partikel eindiffundiert, oder im sog. Extrusionsverfahren durch Einmischen des Treibmittels in eine Polymerschmelze in einem Extruder, und Granulierung der ausgetragenen Schmelze.

Außerdem kann man bereits der Emulsion andere übliche Additive zufügen, z.B. Keimbildner, Weichmacher, Flammschutzmittel, Antistatika, Antioxidantien UV-Absorber, IR-Absorber wie Ruß und Graphit, Aluminiumpulver, lösliche und unlösliche Farbstoffe und Pigmente. Die Additive werden in den dafür üblichen Mengen eingesetzt. Geeignete Keimbildner (Nukleierungsmittel) bei Styrol als Monomer bzw. Polystyrol als Polymerpartikeln sind z.B. Talkum und/oder Wachse sowie Ruß, Graphit und pyrogene Kieselsäuren, in Mengen von insgesamt 0,05 bis 30 Gew.-%, bezogen auf die Monomermenge. Bevorzugte Weichmacher sind Mineralöle, oligomere Styrolpolymere und Phthalate in Mengen von insgesamt 0,05 bis 10 Gew.-%, bezogen auf die Monomermenge.

Jedoch können auch diese Additive nicht der Emulsion, sondern erst zu einem späteren Zeitpunkt, beispielsweise den erhaltenen Polymerpartikeln zugefügt werden.

Die Emulsion kann außerdem andere, organische Emulgatoren (Tenside) enthalten, z.B. Alkylsulfonate. Dazu zählen Alkalisalze der Dodecylbenzolsulfonsäure oder Alkalisalze eines Gemisches von C₁₂₋₁₇-Alkylsulfonsäuren, z.B. ein Gemisch überwiegend sekundärer Natriumalkylsulfonate mit einer mittleren Kettenlänge C₁₅, das bis zu 0,2 Gew.-% organisch gebundenes Chlor enthält (Handelsprodukt Mersotat® K30 von Fa. Bayer). Jedoch werden bevorzugt solche anderen, organischen Emulgatoren nicht mitverwendet, um ein unerwünschtes Schäumen der Emulsion zu verhindern.

Demnach enthalten die erfindungsgemäßen Emulsionen bevorzugt keine organischen Emulgatoren oder Tenside.

### Herstellung der Emulsion

Die Emulsion wird diskontinuierlich oder kontinuierlich auf übliche Weise hergestellt, indem man Wasser, Monomer, Pickering-Emulgatoren, Hydrophobin und ggf. weitere Bestandteile miteinander vermischt (dispergiert). Dabei können die Einsatzstoffe zusammen oder getrennt voneinander, zu einem einzigen Zeitpunkt oder nacheinander, auf einmal, diskontinuierlich in mehreren Portionen oder kontinuierlich entlang einer mathematischen Funktion zugefügt werden, wobei diese Funktion z.B. linear, aufsteigend, absteigend, exponentiell oder stufenförmig sein kann.

Bevorzugt legt man das Hydrophobin als Lösung vor und gibt den Pickering-Emulgator - vorzugsweise als frisch hergestellte wässrige Suspension - hinzu; anschließend wird erforderlichenfalls Wasser zugegeben, um das Monomer/Wasser-Verhältnis einzustellen, und schließlich das Monomer zugefügt. Die erhaltene Mischung wird vermischt.

Das Vermischen erfolgt in an sich bekannter Weise z.B. durch Rühren, Schütteln oder turbulentes Mischen. Je nach Art und Menge der verwendeten Einsatzstoffe und dem gewünschten Durchmesser der Monomertröpfchen in der Emulsion können einfache Rührer (z.B. Magnetrührer, Blattrührer) ausreichend sein, die bei 500 bis 1000, bevorzugt 600 bis 800 Umdrehungen pro Minute (UpM) betrieben werden. Man kann jedoch auch Hochgeschwindigkeitsrührer einsetzten, die typischerweise bei 6000 bis 10.000, insbesondere 9000 bis 10.000 UpM betrieben werden, z.B. den Ultra-Turrax® von Fa. IKA.

Alternativ kann man auch durch andere Mischoperationen vermischen, beispielsweise durch Einspritzen des Monomers in das Wasser oder umgekehrt, durch Schwingungen und Kavitation in der Mischung (z. B. Ultraschall), durch Emulgierzentrifugen, Kolloidmühlen oder Homogenisatoren.

Man kann in jedem dafür geeigneten Behälter durchmischen, im einfachsten Fall ist dies ein Rührkessel oder Rundkolben. Auch Rührkesselkaskaden, Rohrreaktoren, statische oder dynamische Mischer sind einsetzbar. Erforderlichenfalls können Stromstörer angebracht sein, um die Durchmischung zu verbessern.

Die Dauer des Vermischens beträgt bei geringem Energieeintrag meist 1 bis 20 Stunden, bevorzugt 5 bis 15 Stunden. Bei hohem Energieeintrag dauert das Vermischen in der Regel 60 bis 300 sec, bevorzugt 60 bis 120 sec. Die Temperatur bei der Herstellung der Emulsion liegt üblicherweise bei 20 bis 80°C, bevorzugt 20 bis 25°C; der Druck beträgt üblicherweise 1 bis 3 bar, bevorzugt 1 bis 2 bar. Insbesondere bei Monomeren mit geringem Siedepunkt bzw. hohem Dampfdruck kann auch ein Arbeiten bei tieferen Temperaturen und/oder höherem Druck sinnvoll sein.

Vermischungsdauer, Druck und Temperatur richten sich u.a. nach Art und Menge der verwendeten Einsatzstoffe und dem gewünschten Monomertröpfchendurchmesser.

### Eigenschaften der Emulsion und weitere Gegenstände der Erfindung

Die erfindungsgemäße Emulsion besteht aus Wasser als kontinuierlicher Phase und den Monomertröpfchen als dispergierter Phase. Der Durchmesser der Monomertröpfchen kann je nach Art und Menge der Einsatzstoffe und den Bedingungen beim Vermischen in weiten Grenzen variieren und beträgt üblicherweise 100 bis 2000 µm bevorzugt 800 bis 1200 µm, besonders bevorzugt 900 bis 1000 µm, ausgedrückt als zahlenmittlerer Tröpfchendurchmesser d₅₀ (je 50 % der Teilchen sind kleiner bzw. größer als der d₅₀-Durchmesser).

Die Emulsionen sind über längere Zeit, z.B. mehrere Stunden stabil, und neigen nicht zur Schaumbildung.

In einer bevorzugten Ausführungsform sind die erfindungsgemäßen Emulsionen dadurch gekennzeichnet, dass das Monomer Styrol ist, die anorganischen Partikel Magnesiumpyrophosphat enthalten und das Hydrophobin das in dieser Beschreibung in SEQ ID NO: 19 beschriebene ist.

Gegenstand der Erfindung ist auch das vorstehend beschriebene Verfahren zur Herstellung der erfindungsgemäßen Emulsionen, wobei man die Monomere in Wasser in Gegenwart von als Pickering-Emulgator wirksamen anorganischen Partikeln dispergiert, **dadurch gekennzeichnet, dass** man Hydrophobin mitverwendet.

Bevorzugt ist dieses Verfahren **dadurch gekennzeichnet, dass** die Emulsion mindestens eines der Merkmale der Ansprüche 1 bis 8 aufweist.

Weiterer Erfindungsgegenstand ist die Verwendung von Hydrophobin bei der Herstellung von Emulsionen von hydrophoben Monomeren in Wasser. Bevorzugt ist diese Verwendung **dadurch gekennzeichnet, dass** die Emulsion mindestens eines der Merkmale der Ansprüche 1 bis 8 aufweist.

### Suspensionspolymerisation zu Polymerpartikeln

Eingangs wurde bereits erwähnt, dass die erfindungsgemäßen Emulsionen als Einsatzstoff in einer Suspensionspolymerisation verwendet werden können. Diese Verwendung ist ebenfalls Gegenstand der Erfindung.

Die Erfindung umfasst auch ein Verfahren zur Suspensionspolymerisation von hydrophoben Monomeren in Wasser unter Mitverwendung von anorganischen Partikeln als Pickering-Emulgatoren, **dadurch gekennzeichnet, dass** man Hydrophobin mitverwendet. Bevorzugt ist dieses Verfahren **dadurch gekennzeichnet, dass** man als Einsatzstoff eine erfindungsgemäße Emulsion wie definiert in den Ansprüchen 1 bis 8 verwendet.

Verfahren zur Suspensionspolymerisation sind dem Fachmann bekannt, z.B. aus dem Kunststoff-Handbuch, Band V Polystyrol, Hanser-Verlag München. In der Regel verwendet man übliche, in den Monomeren lösliche Polymerisationsinitiatoren. Solche Initiatoren sind z.B. styrollösliche Verbindungen wie tert-Butylperbenzoat oder Dibenzoylperoxid. Sie werden üblicherweise in Mengen von 0,001 bis 10 Gew.-%, bezogen auf die Monomermenge, verwendet.

Außerdem kann man Molekulargewichtsregler wie tert-Dodecylmercaptan oder dimeres α-Methylstyrol mitverwenden, üblicherweise in Mengen von 0,001 bis 0,01 Gew.-%, bezogen auf die Monomere. Auch übliche Schutzkolloide können Verwendung finden, beispielsweise Cellulose-Derivate, Polyvinylalkohole, Polyacrylsäuren, Polyacrylamide oder Polyvinylpyrrolidone. Sie werden in üblichen Mengen eingesetzt. Jedoch werden bevorzugt keine derartigen Schutzkolloide mitverwendet.

Die Temperatur bei der Suspensionspolymerisation beträgt üblicherweise 0 bis 200, bevorzugt 50 bis 150°C. Der Druck liegt in der Regel bei 0,1 mbar bis 50 bar, vorzugsweise 0,8 bar bis 20 bar.

Im Verlauf der Suspensionspolymerisation polymerisieren die (meist flüssigen) Monomertröpfchen zu (üblicherweise festen) Monomerpartikeln, und man erhält eine Suspension von Polymerpartikeln in Wasser. Die Partikelgröße der Polymerpartikel hängt u.a. von der Monomertröpfchengröße ab und beträgt in der Regel 800 bis 2000 µm, bevorzugt 900 bis 1100 µm, ausgedrückt als zahlenmittlerer Partikeldurchmesser d₅₀ (je 50 % der Teilchen sind kleiner bzw. größer als der d₅₀-Durchmesser).

Bei der Suspensionspolymerisation kann man zur Herstellung treibmittelhaltiger Polymerpartikel ein Treibmittel mitverwenden, zu Art und Menge siehe weiter oben. Dazu polymerisiert man bei erhöhtem Druck, d.h. bei über 1 bar bis 50 bar, und Temperaturen von beispielsweise 50 bis 150°C. Alternativ kann man auch zunächst ohne Treibmittel polymerisieren und danach in einem zweiten Schritt die Suspension der erhaltenen Polymerpartikel dem erhöhten Druck und der erhöhten Temperatur aussetzen.

Bei den genannten Druck- und Temperaturbedingungen diffundiert das zugefügte Treibmittel in die Polymerpartikel. Wird die erhaltene Suspension unter Druck abgekühlt, sodass das Treibmittel in den Partikel nicht expandieren kann, so erhält man expandierbare Polymerpartikel. Wird die erhitze Partikelsuspension schlagartig entspannt, expandiert das Treibmittel in den erweichten Partikeln und man erhält expandierte Partikel. Demnach können die Polymerpartikel je nach Fahrweise expandierbar oder expandiert sein.

Gegenstand der Erfindung ist daher auch ein Verfahren zur Herstellung expandierbarer oder expandierter thermoplastischer Polymerpartikel unter Mitverwendung eines Treibmittels, **dadurch gekennzeichnet, dass** die Polymerpartikel mit dem genannten Verfahren zur Suspensionspolymerisation hergestellt werden.

Die mit diesem Verfahren erhältlichen expandierbaren oder expandierten Polymerpartikel sind ebenfalls Erfindungsgegenstand. Aus ihnen lassen sich beispielsweise Schäue (sog. Partikelschäume) oder Schaumstoff-Formkörper herstellen. Die Vorgehensweise ist bekannt: zur Herstellung von expandiertem Polystyrol (Styropor®) kann man beispielsweise zunächst beim sog. Vorschäumen die erfndungsgemäßen expandierbaren, treibmittelhaltigen Polystyrolpartikel durch Erwärmen partiell expandieren. Beim nachfolgenden sog. Ausschäumen werden die partiell expandierten Polystyrolpartikel in eine mit feinen Bohrungen versehene Form gefüllt, die Form verschlossen und durch Einpressen von Wasserdampf oder auf andere Weise die Partikel expandiert, wobei sie miteinander zum Schaum bzw. zum fertigen Schaumstoff-Formteil verschweißen.

Erfindungsgegenstand ist daher auch die Verwendung der erfindungsgemäßen expandierbaren oder expandierten Polymerpartikel zur Herstellung von Schäumen oder Schaumstoff-Formkörpern. Bevorzugt ist insbesondere die Verwendung der erfindungsgemäßen expandierbaren oder expandierten Polystyrolpartikeln zur Herstellung von expandiertem Polystyrol als Schaum oder Schaumstoff-Formkörper, d.h. eine Verwendung bei der die Polymerpartikel Polystyrolpartikel sind und der Schaum bzw. Schaumstoff-Formkörper expandiertes Polystyrol ist

### Beispiele

### Teil A: Herstellung und Test der erfindungsgemäß verwendeten Hydrophobine

### Beispiel 1: Vorarbeiten für die Klonierung von yaad-His₆ / yaaE-His₆

Mit Hilfe der Oligonukleotide Hal570 und Hal571 (Hal 572/ Hal 573) wurde eine Polymerase Kettenreaktion durchgeführt. Als Template DNA wurde genomische DNA des Bakteriums Bacillus subtilis verwendet. Das erhaltene PCR Fragment enthielt die codierende Sequenz des Gens yaaD / yaaE aus Bacillus subtilis, und an den Enden je eine Ncol bzw. Bglll Restriktionsschnittstelle. Das PCR Fragment wurde gereinigt und mit den Restriktionsendonukleasen Ncol und Bglll geschnitten. Dieses DNA Fragment wurde als Insert verwendet, und in den zuvor mit den Restriktionsendonukleasen Ncol und Bglll linearisierten Vektor pQE60 der Firma Qiagen kloniert. Die so enstandenen Vektoren pQE60YAAD#2 / pQE60YaaE#5 können zur Expression von Proteinen bestehend aus, YAAD::HIS₆ bzw. YAAE::HIS₆ verwendet werden.
Hal570: gcgcgcccatggctcaaacaggtactga
Hal571: gcagatctccagccgcgttcttgcatac
Hal572: ggccatgggattaacaataggtgtactagg
Hal573: gcagatcttacaagtgccttttgcttatattcc

### Beispiel 2: Klonierung von yaad-Hydrophobin DewA-His₆

Mit Hilfe der Oligonukleotide KaM 416 und KaM 417 wurde eine Polymerase Kettenreaktion durchgeführt. Als Template DNA wurde genomische DNA des Schimmelpilzes Aspergillus nidulans verwendet. Das erhaltene PCR Fragment enthielt die codierende Sequenz des Hydrophobin Gens dewA und einer N-Terminalen FaktorXa Proteinase Schnittstelle. Das PCR Fragment wurde gereinigt und mit der Restriktionsendonuktease BamHl geschnitten. Dieses DNA Fragment wurde als Insert verwendet, und in den zuvor mit der Restriktionsendonuklease Bglll linearisierten Vektor pQE60YAAD#2 kloniert.

Der so enstandene Vektor #508 kann zur Expressions eines Fusionsproteins bestehend aus, YAAD::Xa::dewA::HIS₆ verwendet werden.
KaM416: GCAGCCCATCAGGGATCCCTCAGCCTTGGTACCAGCGC

### Beispiel 3: Klonierung von yaad-Hydrophobin RodA-HiS₆

Die Klonierung des Plasmids #513 erfolgte analog zu Plasmid #508 unter Verwendung der Oligonukleotide KaM 434 und KaM 435.
KaM434: GCTAAGCGGATCCATTGAAGGCCGCATGAAGTTCTCCATTGCTGC
KaM435: CCAATGGGGATCCGAGGATGGAGCCAAGGG

### Beispiel 4: Klonierung von yaad-Hydrophobin BASF1-His₆

Die Klonierung des Plasmids #507 erfolgte analog zu Plasmid #508 unter Verwendung der Oligonukleotide KaM 417 und KaM 418.

Als Template DNA wurde ein künstlich synthetisierte DNA Sequenz - Hydrophobin BASF1 -eingesetzt (siehe Anhang).
KaM418: CTGCCATTCAGGGGATCCCATATGGAGGAGGGAGACAG

### Beispiel 5: Klonierung von yaad-Hydrophobin BASF2-His₆

Die Klonierung des Plasmids #506 erfolgte analog zu Plasmid #508 unter Verwendung der Oligonukleotide KaM 417 und KaM 418.

Als Template DNA wurde ein künstlich synthetisierte DNA Sequenz - Hydrophobin BASF2 -eingesetzt (siehe Anhang).
KaM418: CTGCCATTCAGGGGATCCCATATGGAGGAGGGAGACAG

### Beispiel 6: Klonierung von yaad-Hydrophobin SC3-His₆

Die Klonierung des Plasmids #526 erfolgte analog zu Plasmid #508 unter Verwendung der Oligonukleotide KaM464 und KaM465.

Als Template DNA wurde cDNA von Schyzophyllum commune eingesetzt (siehe Anhang).
KaM464: CGTTAAGGATCCGAGGATGTTGATGGGGGTGC
KaM465: GCTAACAGATCTATGTTCGCCCGTCTCCCCGTCGT

### Beispiel 7: Fermentation des rekombinanten E.coli Stammes yaad-Hydrophobin DewA-His₆

Inokulation von 3 ml LB Flüssigmedium mit einem yaad-Hydrophobin DewA-His₆ exprimierenden E.coli Stamm in 15 ml Greiner Röhrchen. Inkubation für 8 h bei 37°C auf einem Schüttler mit 200 UpM. Je 2 1I-Erlenmeyer Kolben mit Schikanen und 250 ml LB Medium (+ 100 µg/ml Ampicillin) werden mit jeweils 1 ml der Vorkultur angeimpft und 9 h bei 37°C auf einem Schüttler mit 180 UpM inkubiert.

13.5 I LB-Medium (+100µg/ml Ampicillin) in einem 20 I Fermenter mit 0,5 I Vorkultur (OD₆₀₀ₙₘ 1:10 gegen H₂O gemessen) animpfen. Bei einer OD₆₀ₙₘ von -3.5 Zugabe von 140 ml 100 mM IPTG. Nach 3 h Fermenter auf 10°C abkühlen und Fermentationsbrühe abzentrifugieren. Zellpellet zur weiteren Aufreinigung verwenden.

### Beispiel 8: Reinigung des rekombinanten Hydrohobin-Fusionsproteins (Reinigung von Hydrophobin-Fusionsproteinen, die ein C-terminales His6-tag besitzen)

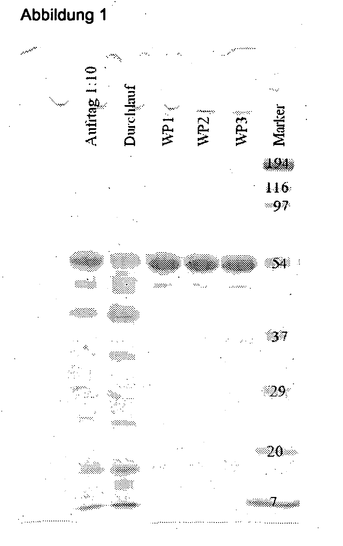

100 g Zellpellet (100 - 500 mg Hydrophobin) werden mit 50 mM Natriumphosphatpuffer, pH 7,5 auf 200 ml Gesamtvolumen aufgefüllt und resuspendiert. Die Suspension wird mit einem Ultraturrax Typ T25 (Janke und Kunkel; IKA-Labortechnik) für 10 Minuten behandelt und anschließend für 1 Stunde bei Raumtemperatur mit 500 Einheiten Benzonase (Merck, Darmstadt; Best.-Nr. 1.01697.0001) zum Abbau der Nukleinsäuren inkubiert. Vor dem Zellaufschluss wird mit einer Glaskartusche (P1) filiert. Zum Zellaufschluß und für das Scheren der restlichen genomischen DNA werden zwei Homogenisatorläufe bei 1.500 bar durchgeführt (Microfluidizer M-110EH; Microfluidics Corp.). Das Homogenisat wird zentrifugiert (Sorvall RC-5B, GSA-Rotor, 250 ml Zentrifugenbecher, 60 Minuten, 4°C, 12.000 UpM, 23.000 g), der Überstand auf Eis gestellt und das Pellet in 100 ml Natriumphosphatpuffer, pH 7,5 resuspendiert. Zentrifugation und Resuspendieren werden dreimal wiederholt, wobei der Natriumphosphatpuffer bei der dritten Wiederholung 1 % SDS enthält. Nach der Resuspension wird für eine Stunde gerührt und eine abschließende Zentrifugation durchgeführt (Sorvall RC-5B, GSA-Rotor, 250 ml Zentrifugen becher, 60 Minuten, 4°C, 12.000 UpM, 23.000 g). Gemäß SDS-PAGE Analyse ist das Hydrophobin nach der abschließenden Zentrifugation im Überstand enthalten (Abbildung 1). Die Versuche zeigen, dass das Hydrophobin wahrscheinlich in Form von Einschlusskörpern in den entsprechenden E.coli Zellen enthalten ist. 50 ml des Hydrophobin enthaltenden Überstandes werden auf eine 50 ml Nickel-Sepharose High Performance 17-5268-02 Säule aufgetragen (Amersham), die mit 50 mM Tris-CI pH 8,0 Puffer äquilibriert wurde. Die Säule wird mit 50 mM Tris-CI pH 8,0 Puffer gewaschen und das Hydrophobin anschließend mit 50 mM Tris-CI pH 8,0 Puffer, der 200 mM Imidazol enthält, eluiert. Zur Entfernung des Imidazols wird die Lösung gegen 50 mM Tris-CI pH 8,0 Puffer dialysiert.

Abbildung 1 zeigt die Reinigung des hergestellten Hydrophobins:
- Spur 1:: Auftrag Nickel-Sepharose Säule (1:10 Verdünnung)
- Spur 2:: Durchlauf = Eluat Waschschritt
- Spuren 3 - 5:: OD 280 Maxima der Elutionsfraktionen

Das Hydrophobin der Abbildung 1 besitzt ein Molekulargewicht von ca. 53 kD. Die kleineren Banden repräsentieren zum Teil Abbauprodukte des Hydrophobins.

### Beispiel 9: Anwendungstechnische Prüfung; Charakterisierung des Hydrophobins durch Kontaktwinkeländerung eines Wassertropfens auf Glas

- Substrat: Glas (Fensterglas, Süddeutsche Glas, Mannheim):
- Konzentration Hydrophobin: 100 µg/mL
- Inkubation von Glasplättchen über Nacht (Temperatur 80°C) in 50mM Na-Acetat pH 4 + 0, 1 % Polyoxyethylen(20)sorbitanmonolaureat (Tween®.20)
- danach Beschichtung waschen in destilliertem Wasser
- danach Inkubation 10min / 80°C / 1% Natrium-Dodecylsulfat (SDS) -Lösung in dest. Wasser
- Waschen in dest. Wasser

Die Proben wurden an der Luft bei 20°C getrocknet und der Kontaktwinkel (in Grad) eines Tropfens von 5 µl Wasser bei Raumtemperatur bestimmt.

Die Kontaktwinkelmessung wurde auf einem Gerät Dataphysics Contact Angle System OCA 15+, Software SCA 20.2.0. (November 2002) bestimmt. Die Messung erfolgte gemäss den Herstellerangaben.

Unbehandeltes Glas ergab einen Kontaktwinkel von 30 ± 5°; eine Beschichtung mit dem funktionellen Hydrophobin gemäss Beispiel 8 (yaad-dewA-his₆) ergab einen Kontaktwinkel von 75 ± 5°.

### Teil B: Emulsion enthaltend Hydrophobin

### Beispiel 10: Herstellung und Untersuchung einer Emulsion von Styrol in Wasser

Es wurde entionisiertes Wasser verwendet. Für die Herstellung der erfindungsgemäßen Emulsion wurde eine Lösung des gemäß Beispiel 8 hergestellten Hydrophobins (Fusionsprotein) yaad-Xa-dewA-his (SEQ ID NO: 19) in Wasser eingesetzt. Die Konzentration des Hydrophobins in der Lösung betrug 100 mg/l (0,02 Gew.-%).

Als Pickering-Emulgator wurde Magnesiumpyrophosphat (MPP) als wässrige Suspension verwendet, die wie folgt hergestellt wurde: bei 20°C wurden 93,18 g Natriumpyrophosphat (Na₄P₂O₇) in 3200 ml Wasser gelöst. Unter Rühren gab man zu dieser Lösung eine Lösung von 172,8 g Magnesiumsulfat (MgSO₄ • 7 H₂O) in 800 ml Wasser und rührte weitere 5 min.

Es wurde eine 50 ml-Weithalsflasche verwendet, die mit einem Magnetrührer versehenen war und ein Teflon®-ummanteltes Rührstäbchen enthielt. Man legte bei 20°C und ohne Rühren 0,3 bis 1,2 g der Hydrophobinlösung vor, gab 1,5 bis 2,5 g der frisch hergestellten MPP-Suspension und 15 bis 20 g Wasser hinzu. Diese Mischung wurde 30 sec bei 700 UpM gerührt. Danach wurden 30 g Styrol zugefügt. Die genauen Mengen an Hydrophobinlösung, MPP-Suspension und Wasser wurden derart gewählt, dass in der erhaltenen Mischung das Phasenvolumenverhältnis Styrol : Wasser 1,3 betrug und der MPP-Gehalt 780 ppmw betrug. Der Hydrophobingehalt der Mischung ist in der folgenden Tabelle angegeben.

Die erhaltene Mischung wurde 17 Stunden bei 20°C und 700 UpM gerührt. Danach wurde 2 Stunden ohne Rühren stehen gelassen und die erhaltene Mischung fotografiert.

Die Stabilität der Mischung bzw. Emulsion wurde durch Verdünnen mit Styrol bzw. Wasser untersucht. Dazu fügte man einer 0,1 ml-Probe der Mischung bei 20 °C 0,1 ml Styrol oder 0,1 ml Wasser zu und beobachtete, ob eine Vermischung möglich war. Außerdem wurde anhand der Fotos die ungefähre Größe der Styroltröpfchen ermittelt.

Die Tabelle fasst die Ergebnisse zusammen.

**Tabelle: Ergebnisse (V bedeutet zum Vergleich, nb nicht bestimmt)**

| Beispiel | Hydrophobin-gehalt [ppmw] | Charakterisierung der Mischung | Größe der Styroltröpfchen |
|---|---|---|---|
| 10-1V | 0 | keine Emulsion | - |
| 10-2 | 21 | instabile Emulsion | nb |
| 10-3 | 42 | stabile Emulsion | einige mm |
| 10-4 | 84 | stabile Emulsion | µm- und mm-Bereich |

Zuordnung der Sequenznamen zu DNA- und Polypeptidsequenzen im Sequenzprotokoll

| | |
|---|---|
| dewA DNA- und Polypeptidsequenz | SEQ ID NO: 1 |
| dewA Polypeptidsequenz | SEQ ID NO: 2 |
| rodA DNA- und Polypeptidsequenz | SEQ ID NO: 3 |
| rodA Polypeptidsequenz | SEQ ID NO: 4 |
| hypA DNA- und Polypeptidsequenz | SEQ ID NO: 5 |
| hypA Polypeptidsequenz | SEQ ID NO: 6 |
| hypB DNA- und Polypeptidsequenz | SEQ ID NO: 7 |
| hypB Polypeptidsequenz | SEQ ID NO: 8 |
| sc3 DNA- und Polypeptidsequenz | SEQ ID NO: 9 |
| sc3 Polypeptidsequenz | SEQ ID NO: 10 |
| basf1 DNA- und Polypeptidsequenz | SEQ ID NO: 11 |
| basf1 Polypeptidsequenz | SEQ ID NO: 12 |
| basf2 DNA- und Polypeptidsequenz | SEQ ID NO: 13 |
| basf2 Polypeptidsequenz | SEQ ID NO: 14 |
| yaad DNA- und Polypeptidsequenz | SEQ ID NO: 15 |
| yaad Polypeptidsequenz | SEQ ID NO: 16 |
| yaae DNA- und Polypeptidsequenz | SEQ ID NO: 17 |
| yaae Polypeptidsequenz | SEQ ID NO: 18 |
| yaad-Xa-dewA-his DNA- und Polypeptidsequenz | SEQ ID NO: 19 |
| yaad-Xa-dewA-his Polypeptidsequenz | SEQ ID NO: 20 |
| yaad-Xa-rodA-his DNA- und Polypeptidsequenz | SEQ ID NO: 21 |
| yaad-Xa-rodA-his Polypeptidsequenz | SEQ ID NO: 22 |
| yaad-Xa-basf1-his DNA- und Polypeptidsequenz | SEQ ID NO: 23 |
| yaad-Xa-basf1-his Polypeptidsequenz | SEQ ID NO: 24 |

## Patentansprüche

1. Emulsionen von hydrophoben Monomeren in Wasser enthaltend anorganische Partikel als Pickering-Emulgatoren, und Hydrophobin.

2. Emulsionen nach Anspruch 1, **dadurch gekennzeichnet, dass** das Monomer Styrol ist, wobei Comonomere mitverwendet werden können, die ausgewählt sind aus α-Methylstyrol, kernhalogenierten Styrolen, kernalkylierten Styrolen, Acrylnitril, Estern der Acrylsäure oder Methacrylsäure von C₁₋₈-Alkoholen, N-Vinylverbindungen, Butadien, Divinylbenzol oder Butandioldiacrylat.

3. Emulsionen nach den Ansprüchen 1 bis 2, **dadurch gekennzeichnet, dass** die anorganischen Partikel ausgewählt sind aus Partikeln enthaltend Magnesiumpyrophosphat, Bariumsulfat, Zinkoxid und Calciumphosphat.

4. Emulsionen nach den Ansprüchen 1 bis 3, **dadurch gekennzeichnet, dass** das Hydrophobin die allgemeine Formel (I)
Xₙ-C¹-X₁₋₅₀-C²-X₀₋₅-C³-X₁₋₁₀₀-C⁴-X₁₋₁₀₀-C⁵-X₁₋₅₀-C⁶-X₁₋₅₀-C⁶-X₁₋₅₀-C⁸-Xₘ (I)
wobei
X für jede der 20 natürlich vorkommenden Aminosäuren (Phe, Leu, Ser, Tyr, Cys, Trp, Pro, His, Gln, Arg, Ile, Met, Thr, Asn, Lys, Val, Ala, Asp, Glu, Gly) steht und die X jeweils gleich oder verschieden sein können,
die bei X stehenden Indizes die Anzahl der Aminosäuren darstellen,
C für Cystein, Alanin, Serin, Glycin, Methionin oder Threonin steht, wobei mindestens vier der mit C benannten Reste für Cystein stehen,
die Indizes n und m unabhängig voneinander für natürliche Zahlen von 0 bis 500 stehen,
aufweist.

5. Emulsionen nach den Ansprüchen 1 bis 4, **dadurch gekennzeichnet, dass** das Hydrophobin die allgemeine Formel (II)
Xₙ₋C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)
wobei X, C und die bei X stehenden Indices die in Anspruch 4 angegebene Bedeutung haben, und die Indices n und m unabhängig voneinander für natürliche Zahlen von 0 bis 300 stehen,
aufweist.

6. Emulsionen nach den Ansprüchen 1 bis 5, **dadurch gekennzeichnet, dass** das Hydrophobin ausgewählt ist aus den Typen dewA, rodA, hypA, hypB, sc3, basf1 und basf2.

7. Emulsionen nach den Ansprüchen 1 bis 6, **dadurch gekennzeichnet, dass** das Monomer Styrol ist, die anorganischen Partikel Magnesiumpyrophosphat enthalten und das Hydrophobin das in der Beschreibung in SEQ ID NO: 19 beschriebene ist.

8. Emulsionen nach den Ansprüchen 1 bis 7, **dadurch gekennzeichnet, dass** sie keine organischen Emulgatoren oder Tenside enthalten.

9. Verfahren zur Herstellung von Emulsionen gemäß den Ansprüchen 1 bis 8, wobei man die Monomere in Wasser in Gegenwart von als Pickering-Emulgator wirksamen anorganischen Partikeln dispergiert, **dadurch gekennzeichnet, dass** man Hydrophobin mitverwendet.

10. Verfahren nach Anspruch 9, **dadurch gekennzeichnet, dass** die Emulsion mindestens eines der Merkmale der Ansprüche 1 bis 8 aufweist.

11. Verwendung von Hydrophobin bei der Herstellung von Emulsionen von hydrophoben Monomeren in Wasser.

12. Verwendung nach Anspruch 11, **dadurch gekennzeichnet, dass** die Emulsion mindestens eines der Merkmale der Ansprüche 1 bis 8 aufweist.

13. Verfahren zur Suspensionspolymerisation von hydrophoben Monomeren in Wasser unter Mitverwendung von anorganischen Partikeln als Pickering-Emufgatoren, **dadurch gekennzeichnet, dass** man Hydrophobin mitverwendet.

14. Verfahren nach Anspruch 13, **dadurch gekennzeichnet, dass** man als Einsatzstoff eine Emulsion wie definiert in den Ansprüchen 1 bis 8 verwendet.

15. Verwendung der Emulsionen gemäß den Ansprüchen 1 bis 8 als Einsatzstoff in einer Suspensionspolymerisation.

16. Verfahren zur Herstellung expandierbarer oder expandierter thermoplastischer Polymerpartikel unter Mitverwendung eines Treibmittels, **dadurch gekennzeichnet, dass** die Polymerpartikel mit dem Verfahren gemäß Anspruch 13 hergestellt werden.

## Claims

1. An emulsion of hydrophobic monomers in water comprising inorganic particles as Pickering emulsifiers, and hydrophobin.

2. The emulsion according to claim 1, wherein the monomer is styrene, where comonomers can be co-used which are chosen from α-methylstyrene, ring-halogenated styrenes, ring-alkylated styrenes, acrylonitrile, esters of acrylic acid or methacrylic acid of C₁₋₈-alcohols, N-vinyl compounds, butadiene, divinylbenzene or butanediol diacrylate.

3. The emulsion according to claims 1 to 2, wherein the inorganic particles are chosen from particles comprising magnesium pyrophosphate, barium sulfate, zinc oxide and calcium phosphate.

4. The emulsion according to claims 1 to 3, wherein the hydrophobin has the general formula (I)
Xₙ-C¹-X₁₋₅₀-C²-X₀₋₅-C³-X₁₋₁₀₀-C⁴-X₁₋₁₀₀-C⁵-X₁₋₅₀-C⁶-X₀₋₅-C⁷-X₁₋₅₀-C⁸-Xₘ (I)
where
X is any of the 20 naturally occurring amino acids (Phe, Leu, Ser, Tyr, Cys, Trp, Pro, His, Gln, Arg, Ile, Met, Thr, Asn, Lys, Val, Ala, Asp, Glu, Gly) and the X may in each case be identical or different,
the indices alongside X are the number of amino acids,
C is cysteine, alanine, serine, glycine, methionine or threonine, where at least four of the radicals named as C are cysteine,
the indices n and m, independently of one another, are natural numbers from 0 to 500.

5. The emulsion according to claims 1 to 4, wherein the hydrophobin has the general formula (II)
Xₙ-C¹-X₃₋₂₅-C²-X₀₋₂C³-X₅₋₅₀-C⁴-X₂₋₃₅-C⁵-X₂₋₁₅-C⁶-X₀₋₂C⁷-X₃₋₃₅-C⁸-Xₘ (II)
where X, C and the indices alongside X have the meaning given in claim 4, and the indices n and m, independently of one another, are natural numbers from 0 to 300.

6. The emulsion according to claims 1 to 5, wherein the hydrophobin is chosen from the types dewA, rodA, hypA, hypB, sc3, basf1 and basf2.

7. The emulsion according to claims 1 to 6, wherein the monomer is styrene, the inorganic particles comprise magnesium pyrophosphate and the hydrophobin is that described in the description in SEQ ID NO: 19.

8. The emulsion according to claims 1 to 7, which comprises no organic emulsifiers or surfactants.

9. A process for the preparation of emulsions according to claims 1 to 8, where the monomers are dispersed in water in the presence of inorganic particles which act as Pickering emulsifier, wherein hydrophobin is co-used.

10. The process according to claim 9, wherein the emulsion has at least one of the features of claims 1 to 8.

11. The use of hydrophobin in the preparation of emulsions of hydrophobic monomers in water.

12. The use according to claim 11, wherein the emulsion has at least one of the features of claims 1 to 8.

13. A process for the suspension polymerization of hydrophobic monomers in water with co-use of inorganic particles as Pickering emulsifiers, wherein hydrophobin is co-used.

14. The process according to claim 13, wherein an emulsion as defined in claims 1 to 8 is used as feed material.

15. The use of the emulsions according to claims 1 to 8 as feed material in a suspension polymerization.

16. A process for the preparation of expandable or expanded thermoplastic polymer particles with co-use of a propellant, wherein the polymer particles are prepared using the process according to claim 13.

## Revendications

1. Émulsions de monomères hydrophobes dans l'eau, contenant des particules inorganiques en tant qu'émulsifiants de Pickering, et de l'hydrophobine.

2. Émulsions selon la revendication 1, **caractérisées en ce que** le monomère est le styrène, des comonomères pouvant être utilisés, qui sont choisis parmi l'a-méthylstyrène, les styrènes halogénés sur le noyau, les styrènes alkylés sur le noyau, l'acrylonitrile, des esters de l'acide acrylique ou de l'acide méthacrylique avec des alcools en C₁-C₈, les composés N-vinyliques, le butadiène, le divinylbenzène ou le diacrylate de butanediol.

3. Émulsions selon les revendications 1 et 2, **caractérisées en ce que** les particules inorganiques sont choisies parmi des particules contenant du pyrophosphate de magnésium, du sulfate de baryum, de l'oxyde de zinc et du phosphate de calcium.

4. Émulsions selon les revendications 1 à 3, **caractérisées en ce que** l'hydrophobine correspond à la formule générale (I)
Xₙ-C¹-X₁₋₅₀-C²-X₀₋₅-C³-X₁₋₁₀₀-C⁴-X₁₋₁₀₀-C⁵-X₁₋₅₀-C⁶-X₀₋₅-C⁷-X₁₋₅₀-C⁸-Xₘ (I)
dans laquelle
X représente chacun des 20 acides aminés présents dans la nature (Phe, Leu, Ser, Tyr, Cys, Trp, Pro, His, Gln, Arg, Ile, Met, Thr, Asn, Lys, Val, Ala, Asp, Glu, Gly) et les X peuvent être chaque fois identiques ou différents,
les indices mis après les X représentant le nombre des acides aminés,
C représente la cystéine, l'alanine, la sérine, la glycine, la méthionine ou la thréonine, au moins quatre des résidus indiqués par C représentant la cystéine, les indices n et m représentent, indépendamment l'un de l'autre, des nombres entiers naturels allant de 0 à 500.

5. Émulsions selon les revendications 1 à 4, **caractérisées en ce que** l'hydrophobine correspond à la formule générale (II)
Xₙ-C¹-X₃₋₂₅-C²-X₀₋₂-C³-X₅₋₅₀-C⁴-X₂₋₃₅-C⁵-X₂₋₁₅-C⁶-X₀₋₂-C⁷-X₃₋₃₅-C⁸-Xₘ (II)
dans laquelle X, C et les indices mis après les X ont les significations données dans la revendication 4 et les indices n et m représentent, indépendamment l'un de l'autre, des nombres entiers naturels allant de 0 à 300.

6. Émulsions selon les revendications 1 à 5, **caractérisées en ce que** l'hydrophobine est choisie parmi les types dewA, rodA, hypA, hypB, sc3, basf1 et basf2.

7. Émulsions selon les revendications 1 à 6, **caractérisées en ce que** le monomère est le styrène, les particules inorganiques contiennent du pyrophosphate de magnésium et l'hydrophobine est décrite par la description dans SEQ ID n° 19.

8. Émulsions selon les revendications 1 à 7, **caractérisées en ce qu'**elles ne contiennent pas d'émulsifiants organiques ni de tensioactifs.

9. Procédé pour la préparation d'émulsions selon les revendications 1 à 8, dans lequel on disperse les monomères dans de l'eau en présence de particules inorganiques actives en tant qu'émulsifiant de Pickering, **caractérisé en ce qu'**on utilise en même temps de l'hydrophobine.

10. Procédé selon la revendication 9, **caractérisé en ce que** l'émulsion présente au moins l'une des caractéristiques des revendications 1 à 8.

11. Utilisation d'hydrophobine dans la préparation d'émulsions de monomères hydrophobes dans de l'eau.

12. Utilisation selon la revendication 11, **caractérisée en ce que** l'émulsion présente au moins l'une des caractéristiques des revendications 1 à 8.

13. Procédé pour la polymérisation en suspension de monomères hydrophobes dans de l'eau avec utilisation simultanée de particules inorganiques en tant qu'émulsifiants de Pickering, **caractérisé en ce qu'**on utilise en même temps de l'hydrophobine.

14. Procédé selon la revendication 13, **caractérisé en ce qu'**on utilise comme substance de départ une émulsion telle que définie dans les revendications 1 à 8.

15. Utilisation des émulsions selon les revendications 1 à 8, comme substance de départ dans une polymérisation en suspension.

16. Procédé pour la production de particules de polymère thermoplastique expansées ou expansibles avec utilisation simultanée d'un agent d'expansion, **caractérisé en ce que** les particules de polymère sont préparées par le procédé selon la revendication 13.
